# EUROPÄISCHE PATENTSCHRIFT

(11) **EP 3 210 068 B1**
(45) Veröffentlichungstag und Bekanntmachung des Hinweises auf die Patenterteilung: **22.09.2021**
(21) Anmeldenummer: 15781059.9
(22) Anmeldetag: 13.10.2015
(51) Int. Cl.: G02B 27/01, G02B 27/00

(54) **ABBILDUNGSOPTIK UND DATENBRILLE**
IMAGING OPTICAL UNIT AND SMART GLASSES
OPTIQUE DE VISUALISATION ET LUNETTES INTELLIGENTES

(30) Priorität: 21.10.2014 DE 102014115341
(43) Veröffentlichungstag der Anmeldung: 30.08.2017
(73) Patentinhaber: tooz technologies GmbH, 73430 Aalen (DE)
(72) Erfinder: DOBSCHAL, Hans-Jürgen, 99510 Kleinromstedt (DE); LINDIG, Karsten, 99084 Erfurt (DE)
(74) Vertreter: PATERIS Patentanwälte PartmbB
(86) Internationale Anmeldenummer: PCT/EP2015/073671
(87) Internationale Veröffentlichungsnummer: WO 2016/062582

(56) Entgegenhaltungen:
- DE-A1-102007 004 444
- US-A1- 2010 208 341
- US-B1- 8 233 204

## Beschreibung

Die vorliegende Erfindung betrifft eine Abbildungsoptik zum Darstellen eines virtuellen Bildes sowie eine Datenbrille mit einer Abbildungsoptik zum Darstellen eines virtuellen Bildes.

Eine Datenbrille ist eine spezielle Form eines Head Mounted Displays. Eine gängige Form von Head Mounted Displays verwendet Bildschirme, die vor den Augen getragen werden und dem Benutzer computergenerierte Bilder oder von Kameras aufgenommene Bilder präsentieren. Derartige Head Mounted Displays sind häufig voluminös und erlauben keine unmittelbare Wahrnehmung der Umgebung. Erst in jüngerer Zeit sind Head Mounted Displays entwickelt worden, die in der Lage sind, dem Benutzer ein mit einer Kamera aufgenommenes Bild oder ein computergeneriertes Bild darzubieten, ohne die unmittelbare Wahrnehmung der Umgebung zu verhindern. Derartige Head Mounted Displays, die nachfolgend Datenbrillen genannt werden, ermöglichen die Nutzung dieser Technologie im alltäglichen Leben.

Datenbrillen können auf verschiedene Arten bereitgestellt werden. Eine Art der Datenbrille, die sich insbesondere durch ihre Kompaktheit und ästhetische Akzeptanz auszeichnet, beruht auf dem Prinzip der Wellenleitung im Brillenglas. Dabei wird von einem Bildgeber generiertes Licht außerhalb des Brillenglases kollimiert und über die Stirnfläche des Brillenglases eingekoppelt, von wo aus es sich über mehrfache Totalreflexion bis vor das Auge ausbreitet. Ein sich dort befindliches optisches Element koppelt das Licht dann in Richtung der Augenpupille aus. Die Einkopplung in das Brillenglas und die Auskopplung aus dem Brillenglas können dabei entweder diffraktiv, reflektiv oder refraktiv erfolgen. Bei einem diffraktiven Ein- oder Auskoppeln finden als Ein- und Auskopplungselemente Beugungsgitter annähernd gleicher Strichzahl Verwendung, wobei die stark dispersiven Wirkungen der einzelnen Gitter untereinander kompensiert werden. Auf Beugungsgittern beruhende Ein- und Auskoppelelemente sind beispielsweise in US 2006/0126181 A1 und in US 2010/0220295 A1 beschrieben. Beispiele für Datenbrillen mit reflektiven oder refraktiven Ein- oder Auskoppelelementen sind in US 2012/0002294 A1 beschrieben.

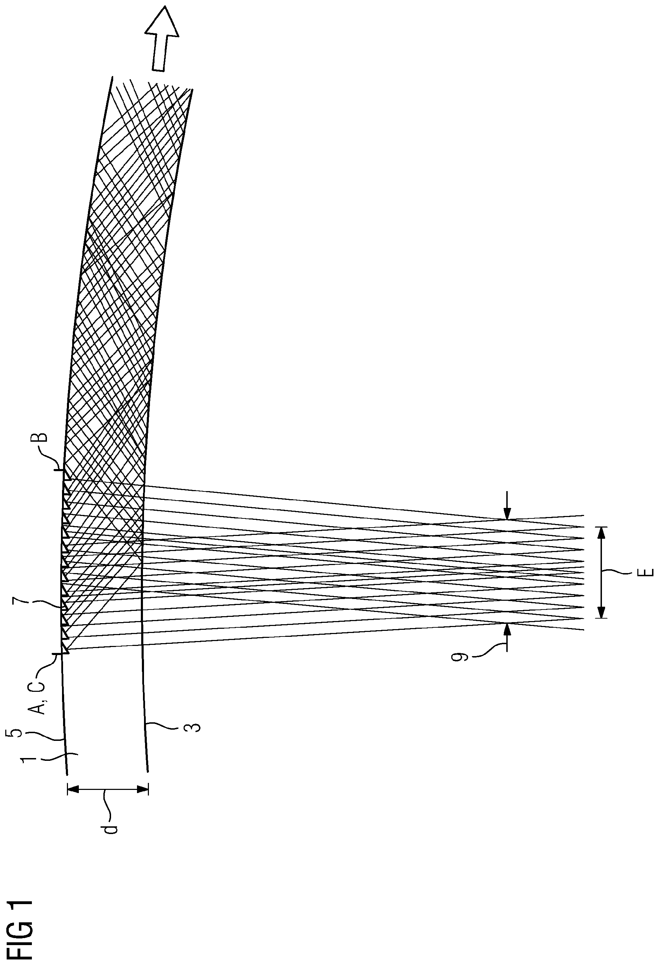

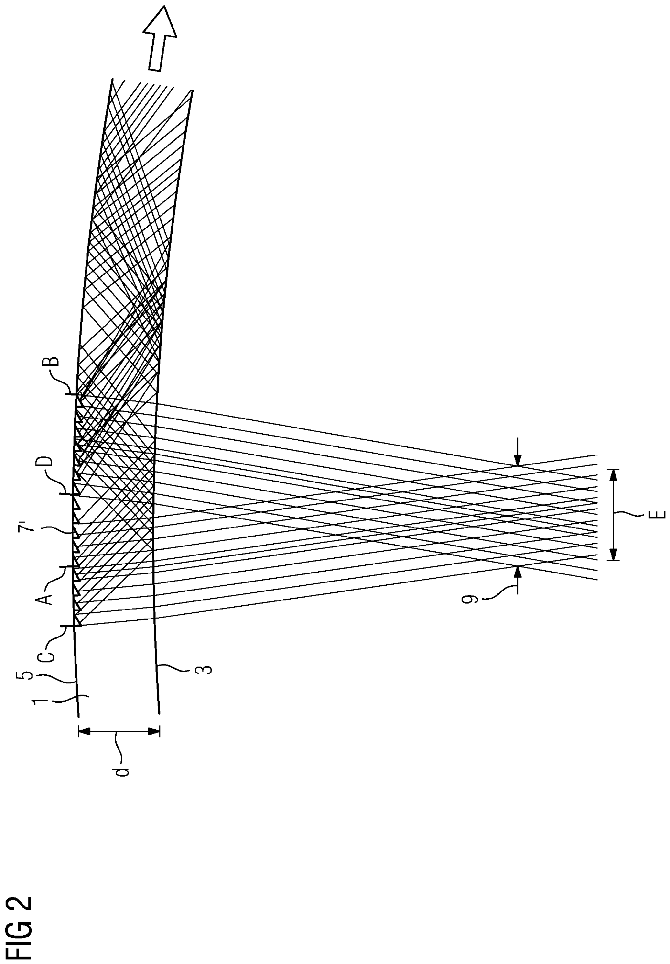

Datenbrillen, bei denen ein Abbildungsstrahlenbündel unter mehrfacher (Total)Reflexion von einem Einkoppelelement zu einem Auskoppelelement geleitet wird, haben unabhängig davon, ob als Ein- und Auskoppelelemente diffraktive, reflektive oder refraktive Elemente Verwendung finden, die Problematik des sogenannten "Footprint Overlap" gemeinsam. Diese Problematik, die die Größe des Sichtfeldes (FOV field of view) sowie die Größe der Austrittspupille der Datenbrille am Ort der Eyebox begrenzt und aufgrund deren eine relativ hohe Brillenglasdicke notwendig ist, wird nachfolgend anhand der Figuren 1 und 2 näher erläutert.

Die Eyebox ist derjenige dreidimensionale Bereich der Lichtröhre im Abbildungsstrahlengang, in dem sich die Augenpupille bewegen kann, ohne dass eine Vignettierung des Bildes erfolgt. Da bei einer Datenbrille der Abstand des Auges in Bezug auf die Datenbrille im Wesentlichen konstant ist, kann die Eye Box auf eine zweidimensionale Eye Box, welche lediglich die Drehbewegungen des Auges berücksichtigt, reduziert werden. In diesem Fall entspricht die Eye Box im Wesentlichen der Austrittspupille der Datenbrille am Ort der Eintrittspupille des Auges. Letztere ist in der Regel durch die Augenpupille gegeben. Obwohl es sich bei einer Datenbrille um ein System handelt, mit dem ein Abbildungsstrahlengang vom Bildgeber zur Austrittspupille der Datenbrille verläuft, ist es zum Verständnis des "Footprint Overlap" hilfreich, den Strahlengang in umgekehrter Richtung, also von der Austrittspupille zum Bildgeber, zu betrachten. Es wird daher bei den nachfolgenden Darlegungen eine von der Ausgangspupille der Datenbrille, ausgehende Lichtröhre betrachtet, wobei die Grenzen der Lichtröhre durch die Sichtfeldwinkel der sich von jedem Punkt der Eye Box in Richtung auf das Brillenglas ausbreitenden Strahlenbündel bestimmt ist. Nach Brechung an der Innenfläche 3 des Brillenglases 1 treffen die Strahlen in der Lichtröhre auf die Außenfläche 5 des Brillenglases 1 auf. In dieser befindet sich die Auskopplungsstruktur 7, welche sich in horizontaler Richtung von Punkt B zum Punkt C erstreckt. Der Abstand zwischen den Punkten B und C wird durch die gewünschte Ausdehnung der Lichtröhre bestimmt, die wiederum von der gewünschten Größe der Eye Box 9 und dem gewünschten Sichtfeldwinkel abhängt. Der Sichtfeldwinkel ist hier in erster Linie der horizontale Sichtfeldwinkel, welcher denjenigen Winkel bezogen auf die Sehachse betrifft, unter dem die horizontalen Randpunkte des Bildfeldes in die Pupille einfallen. Die Sehachse bezeichnet dabei eine gerade Linie zwischen der Fovea des Auges (Punkt des schärfsten Sehens der Netzhaut) und dem Mittelpunkt des Bildfeldes. In Figur 1 ist der Verlauf der Lichtröhre bei einem Eye-Box-Durchmesser E und einer Dicke d des Brillenglases 1 für einen relativ kleinen Sichtfeldwinkel dargestellt. Alle Strahlen der Lichtröhre werden aus der Auskopplungsstruktur 7 in Richtung der Innenfläche 3 des Brillenglases 1 gebeugt oder reflektiert und von dort mittels Totalreflexion an die Außenfläche 5 des Brillenglases 1 zurückreflektiert, von wo aus sie unter Totalreflexion wieder auf die Innenfläche 3 des Brillenglases 1 zurückreflektiert werden. Diese Hin-und-Her-Reflexion geschieht solange, bis das Einkoppelelement erreicht ist, von wo aus die Lichtröhre dann in Richtung auf den Bildgeber weiter verläuft.

Wenn, wie in Figur 1 dargestellt, der Sichtfeldwinkel relativ gering ist, treffen die Strahlen der Lichtröhre nach der ersten Totalreflexion an der Innenfläche 3 des Brillenglases 1 auf einen Bereich der Außenfläche 5 des Brillenglases 1, der außerhalb des Auskopplungselementes 7 liegt (in Fig. 1 rechts neben dem Punkt B). Wenn dagegen ein großer Sichtfeldwinkel gewünscht ist, wie dies in Figur 2 dargestellt ist, ist eine entsprechend vergrößerte Auskopplungsstruktur 7' notwendig. Dies führt jedoch dazu, dass Strahlen der Lichtröhre, die auf den zwischen den Punkten A und C gelegenen Abschnitt der Auskopplungsstruktur 7' auftreffen, nach der ersten Totalreflexion an der Innenfläche 3 des Brillenglases 1 auf einen Bereich der Außenfläche 5 des Brillenglases 1 zurückreflektiert werden, in dem sich noch die Auskopplungsstruktur 7' befindet. Dieser Bereich, im folgenden Überlappbereich genannt, befindet sich in Figur 2 zwischen den Punkten B und D. Aufgrund des Vorhandenseins des Auskopplungselementes, welches bei der in Figur 2 gewählten Darstellung ein diffraktives oder reflektives Auskopplungselement sein kann, werden die von der Innenfläche 3 des Brillenglases 1 in den Bereich zwischen B und D reflektierten Strahlen nicht in Richtung auf die Innenfläche 3 zurückreflektiert, so dass diese für die Abbildung verloren gehen.

Eine ähnliche Problematik tritt auch auf, wenn nicht der Sichtfeldwinkel vergrößert wird, sondern der Durchmesser der Eye Box. Auch in diesem Fall würde es Punkte A und C geben, zwischen denen sich ein Bereich befindet, der Strahlen in Richtung auf die Innenfläche 3 des Brillenglases 1 reflektiert, die von dort wiederum unter Totalreflexion in einen durch die Punkte B und D gekennzeichneten Bereich der Auskopplungsstruktur 7' zurückreflektiert werden und daher für die Abbildung unbrauchbar sind. Entsprechendes würde auch gelten, wenn der Eye-Box-Durchmesser E und der Sichtfeldwinkel beibehalten würden und dafür die Dicke d des Brillenglases verringert würde. Mit anderen Worten, ein hinreichend großer Eye-Box-Durchmesser E bei einem hinreichend großen Sichtfeldwinkel kann nur mit einer gewissen Mindestdicke d des Brillenglases erreicht werden.

Es sei an dieser Stelle noch einmal darauf hingewiesen, dass für die obige Betrachtung der Strahlengang umgekehrt worden ist, und dass der tatsächliche Strahlengang vom Bildgeber in die Austrittspupille der Datenbrille verläuft. An der grundsätzlichen Betrachtung ändert dies jedoch nichts, da vom Bildgeber kommende Strahlen, die im Bereich zwischen den Punkten B und D auf die Auskopplungsstruktur 7' auftreffen, nicht in die Austrittspupille reflektiert werden, da sie nicht mittels Totalreflexion in Richtung auf die Innenfläche des Brillenglases zurückreflektiert werden, was jedoch nötig wäre, um den Bereich der Auskopplungsstruktur 7' zwischen den Punkten A und C zu erreichen, von wo aus sie in Richtung auf die Austrittspupille ausgekoppelt werden könnten.

Die US 8,233,204 B1 beschreibt ein Head Mounted Display, in dem schaltbare Bragg-Gitter zeitsequenziell geschaltet werden oder Hologramme, die durch einen Luftraum voneinander getrennt sind, Verwendung finden, um einen Footprint Overlap zu vermeiden.

Die US 2010/0208341 A beschreibt ein Zielfernrohr mit zwei Teilstrukturen, die dazu dienen, auf zwei unterschiedlichen Displays dargestellte Bilder in den Strahlengang des Zielfernrohrs einzukoppeln.

Die DE 10 2007 004 444 A1 beschreibt verschiedene Einkopplungsmethoden zum Einkoppeln eines Strahlengangs in ein Brillenglas.

Im Lichte des beschriebenen Standes der Technik ist es eine erste Aufgabe der vorliegenden Erfindung, eine Abbildungsoptik zur Verfügung zu stellen, mit der die beschriebene Problematik des "Footprint Overlap" verringert werden kann. Daneben ist es eine zweite Aufgabe der vorliegenden Erfindung, eine vorteilhafte Datenbrille zur Verfügung zu stellen. Die erste Aufgabe wird durch eine Abbildungsoptik nach Anspruch 1 gelöst, die zweite Aufgabe durch eine Datenbrille nach Anspruch 14. Die abhängigen Ansprüche enthalten vorteilhafte Ausgestaltungen der Erfindung.

Die Erfindung stellt eine Abbildungsoptik zum Darstellen eines virtuellen Bildes zur Verfügung, die insbesondere in einer Datenbrille Verwendung finden kann. Die Abbildungsoptik, wie sie in Anspruch 1 definiert ist, umfasst u.a.:
- Wenigstens ein vor dem Auge zu tragendes Brillenglas, welches eine dem Auge zuzuwendende Innenfläche und eine vom Auge abzuwendende Außenfläche aufweist. In der erfindungsgemäßen Abbildungsoptik kann das Brillenglas ein eine Fehlsichtigkeit korrigierendes Brillenglas sein, oder ein optisches Nullelement, das keine Fehlsichtigkeit korrigiert. Letzteres kann insbesondere der Fall sein, wenn die Abbildungsoptik in einer Datenbrille zum Einsatz kommen soll, die als Sonnenbrille oder Schutzbrille ausgebildet ist. Außerdem kann das Brillenglas aus Kunststoff oder Glas hergestellt sein. Das Brillenglas kann mehrlagig aufgebaut sein.
- Eine Anzeigevorrichtung, welche einen Bildgeber (Display) zum Anzeigen eines Ausgangsbildes umfasst, wobei der Bildgeber Ausgangspunkt eines das virtuelle Bild aus dem Ausgangsbild erzeugenden Abbildungsstrahlengangs ist. Die Anzeigevorrichtung kann lediglich aus dem Bildgeber bestehen, oder sie kann weitere Elemente, bspw. Linsen, Spiegel, Prismen, etc., und/oder eine Einrichtung zum Justieren des Bildgebers umfassen. Als Bildgeber kommen alle Arten von Displays, insbesondere Flüssigkristallanzeigen (LCDs, Liquid Cristal Displays) auf Leuchtioden basierende Displays (LED-Displays) und auf organischen Leuchtioden basierende Displays (OLED-Displays) in Frage.

- Eine Einkopplungseinrichtung zum Einkoppeln des Abbildungsstrahlenganges zwischen die Innenfläche und die Außenfläche des Brillenglases. Die Einkopplungseinrichtung kann bspw. Teil des Brillenglases oder Teil der Anzeigevorrichtung sein.
- Eine in dem Brillenglas vorhandene Auskopplungsstruktur zum Auskoppeln des Abbildungsstrahlengangs aus dem Brillenglas in Richtung auf das Auge. Dabei koppelt die Einkopplungseinrichtung den Abbildungsstrahlengang derart zwischen die Innenfläche und die Außenfläche des Brillenglases ein, dass er durch Reflexionen zwischen der Innenfläche und der Außenfläche des Brillenglases zur Auskopplungsstruktur geleitet wird. Die Reflexionen können durch eine Totalreflexion an der Grenzfläche zwischen dem Medium/den Medien des Brillenglases und dem umgebenden Medium - in der Regel Luft - realisiert sein oder durch Reflexion an einer reflektierenden oder teilreflektierenden Beschichtung, die auf die Innenfläche und/oder die Außenfläche des Brillenglases aufgebracht ist. Dabei besteht die Möglichkeit, dass entweder alle Reflexionen durch Totalreflexion oder alle Reflexionen durch Reflexion an einer reflektierenden oder teilreflektierenden Beschichtung bewirkt werden. Es besteht aber auch die Möglichkeit, dass eine oder mehrere Reflexionen durch Reflexion an einer reflektierenden oder teilreflektierenden Beschichtung und die übrigen Reflexionen durch Totalreflexion bewirkt werden. Bei der Innenfläche und/oder Außenfläche muss es sich nicht notwendigerweise um eine Grenzfläche zwischen dem Medium/den Medien des Brillenglases und dem umgebenden Medium handeln. Vielmehr kann/können die Innenfläche und/oder die Außenfläche bei einem mehrlagigen Aufbau des Brillenglases zwischen zwei Lagen oder Teilkörpern des Brillenglases im Brillenglasinneren angeordnet sein. Beispielsweise kann die Innenfläche durch eine teilreflektive Schicht zwischen einem ersten dem Auge zugewandten Teilkörper des Brillenglases und einem zweiten dem Auge abgewandten Teilkörper des Brillenglases gebildet sein. Gleiches kann auf die Außenfläche zutreffen.

In der erfindungsgemäßen Abbildungsoptik weist die Auskopplungsstruktur eine Streifenstruktur mit Facetten auf, wobei die Streifenstruktur entlang einer Trennlinie aus zwei in einem Winkel β zueinander angeordneten Teilstrukturen zusammengesetzt ist, die aus unterschiedlichen Richtungen eintreffende Strahlengänge in Richtung auf das Auge auskoppeln, wobei die unterschiedlichen Richtungen der eintreffenden Strahlengänge durch den Winkel β zwischen den Teilstrukturen bestimmt sind und wobei die Streifenstruktur entlang der Trennlinie in die zwei Teilstrukturen unterteilt ist, wobei β den Winkel zwischen zwei senkrecht zur Ausdehnungsrichtung der Facetten verlaufenden Geraden repräsentiert,. Hierbei besteht insbesondere die Möglichkeit, dass die Trennlinie die Auskopplungsstruktur in zwei gleich große Teilstrukturen aufteilt. Außerdem kann der eine der aus unterschiedlichen Richtungen kommenden Strahlengänge einen Winkel β/2 mit der Trennlinie und der andere der aus unterschiedlichen Richtungen kommenden Strahlengänge einen Winkel - β/2 mit der Trennlinie einschließen, so dass eine Symmetrie zur Trennlinie erreicht werden kann.

Zwischen der Anzeigevorrichtung und demjenigen Bereich des Brillenglases, in dem die erste Reflexion stattfindet, ist in der erfindungsgemäßen Abbildungsoptik zudem eine Strahlaufteilerstruktur vorhanden, die den vom Bildgeber ausgehenden Abbildungsstrahlengang in zwei Abbildungsteilstrahlengänge aufteilt, welche die aus unterschiedlichen Richtungen an den Teilstrukturen der Auskopplungsstruktur eintreffenden Strahlengänge bilden. Die Strahlaufteilerstruktur kann insbesondere zwischen dem Bildgeber und dem Rand des Brillenglases angeordnet sein.

Die Auskopplungsstruktur ist an der Außenfläche oder der Innenfläche des Brillenglases angeordnet. Der Winkel β ist derart gewählt ist, dass im Falle einer an der Außenfläche des Brillenglases angeordneten Auskopplungsstruktur der letzte Reflexionspunkt für eine Reflexion an der Außenfläche im Vergleich zu einer nicht aus zwei unter einem Winkel β zueinander angeordneten Teilstrukturen aufgebauten Auskoppelstruktur in einen Bereich der Außenfläche verlagert wird, in dem sich die Auskopplungsstruktur nicht befindet. Im Falle einer an der Innenfläche des Brillenglases angeordneten Auskopplungsstruktur ist der Winkel β ist derart gewählt, dass der letzte Reflexionspunkt für eine Reflexion an der Innenfläche im Vergleich zu einer nicht aus zwei unter einem Winkel β zueinander angeordneten Teilstrukturen aufgebauten Auskoppelstruktur in einen Bereich der Innenfläche verlagert wird, in dem sich die Auskopplungsstruktur nicht befindet.

In der erfindungsgemäßen Abbildungsoptik kann die Einkopplungseinrichtung insbesondere an einer Seitenkante des Brillenglases angeordnet sein. Die Auskopplungsstruktur kann dann eine sich entlang einer Breitenausdehnungsrichtung erstreckende Breite und eine sich entlang einer zur Breitenausdehnungsrichtung senkrechten Höhenausdehnungsrichtung erstreckende Höhe aufweisen, wobei die Breitenausdehnungsrichtung im Wesentlichen in Querrichtung des Brillenglases verläuft. In diesem Fall kann die Trennlinie zwischen den Teilstrukturen parallel zur Breitenausdehnungsrichtung verlaufen. Eine derartige Ausgestaltung ist besonders gut mit der Geometrie typischer Brillengläser vereinbar. Außerdem ermöglicht diese Ausgestaltung bei einer mit der Abbildungsoptik versehenen Datenbrille die Unterbringung der Anzeigevorrichtung im Brillenbügel oder zwischen dem Brillenbügel und dem Brillenglas, so dass die Anzeigevorrichtung relativ unauffällig in die Datenbrille integriert werden kann.

Mit der erfindungsgemäßen Abbildungsoptik kann die eingangs beschriebene Problematik des "Footprint Overlap" deutlich verringert werden. Dadurch, dass die Auskopplungsstruktur aus zwei in einem Winkel β zueinander angeordneten Teilstrukturen, die aus unterschiedlichen Richtungen eintreffende Strahlengänge in Richtung auf das Auge auskoppeln, zusammengesetzt ist, können diejenigen Bereiche im Brillenglas, in denen die Reflexion stattfinden muss und die im Stand der Technik im Abschnitt zwischen den Punkten B und D der Auskopplungsstruktur liegen, nach außerhalb der Auskopplungsstruktur verlegt werden. Wenn die Trennlinie beispielsweise in Breitenausdehnungsrichtung der Auskopplungsstruktur verläuft, kann die Reflexion aufgrund des Winkels zwischen den Teilstrukturen in Bereiche des Brillenglases verlegt werden, die sich oberhalb und unterhalb der Auskopplungsstruktur befinden.

Da die Auskopplungsstruktur relativ nahe an der Austrittspupille der Abbildungsoptik angeordnet ist, kann davon ausgegangen werden, dass für die meisten Urbildpunkte die Abbildung gleichzeitig über beide Abbildungsteilstrahlengänge verläuft, was bedeutet, dass von ein und demselben Urbildpunkt ausgehende Strahlenbündel in Teilstrahlenbündel aufgeteilt werden, die entlang der beiden Abbildungsteilstrahlengänge verlaufen. Diese müssen dann jedoch wieder auf einen gemeinsamen Bildpunkt ankommen, was durch die Ausrichtung von Ablenkelementen der Strahlaufteilerstruktur realisiert werden kann. Zudem muss in beiden Abbildungsteilstrahlengängen dieselbe Brennweite vorliegen, was durch geeignete Ausgestaltung der Abbildungsoptik realisiert sein kann. Die Strahlaufteilerstruktur der erfindungsgemäßen Abbildungsoptik ist daher vorzugsweise so ausgebildet, dass sie für jeden Abbildungsteilstrahlengang wenigstens ein Ablenkelement umfasst, das den jeweiligen Abbildungsstrahlengang in Richtung auf die entsprechende Teilstruktur der Auskopplungsstruktur in das Brillenglas ablenkt, wobei die Ablenkelemente für die beiden Abbildungsteilstrahlengänge so ausgerichtet sind, dass von demselben Urbildpunkt des Bildgebers ausgehende Strahlenbündel der Abbildungsstrahlengänge auf demselben Bildpunkt im virtuellen Bild wieder zusammengeführt werden. Außerdem weist die Abbildungsoptik dann für beide Abbildungsteilstrahlengänge dieselbe Brennweite auf. Die Ablenkelemente können insbesondere reflektive Ablenkelemente oder refraktive Ablenkelemente sein. Als reflektive Ablenkelemente können Spiegel, Prismenflächen oder sonstige Reflexionsflächen zur Anwendung kommen, als refraktive Ablenkelemente beispielsweise Prismen.

Die Abbildungsoptik kann zumindest teilweise in die Einkopplungseinrichtung integriert sein und beispielsweise dadurch realisiert werden, dass die Einkopplungseinrichtung mit entsprechenden Freiformflächen ausgestattet ist. Zusätzlich oder alternativ kann die Abbildungsoptik zumindest teilweise in die Auskopplungsstruktur integriert sein, die dann beispielsweise entsprechende Freiformflächen aufweisen kann. Weiter zusätzlich oder alternativ kann die Abbildungsoptik zumindest teilweise in den Strahlaufteiler integriert sein, wobei dann die reflektierenden oder brechenden Flächen als geeignete Freiformflächen ausgebildet sind. Noch weiter zusätzlich oder alternativ kann die Abbildungsoptik zumindest teilweise in die Anzeigevorrichtung integriert sein. Hier kann die Abbildungsoptik geeignete Linsen- oder Spielflächen aufweisen. Insbesondere besteht die Möglichkeit, dass wenigstens zwei der Elemente Einkopplungseinrichtung, Auskopplungsstruktur, Strahlaufteiler und Anzeigevorrichtung jeweils einen Teil der Abbildungsoptik beinhalten und gemeinsam für das Erzeugen des virtuellen Bildes sorgen.

Die Auskopplungsstruktur kann insbesondere eine reflektive Streifenstruktur mit reflektiven Streifen sein. In diesem Fall ist die Streifenstruktur an der Außenfläche des Brillenglases angeordnet und kann aus verspiegelten Streifen oder teilverspiegelten Streifen bestehen. Insbesondere im Falle verspiegelter Streifen können reflektive und nicht reflektive Streifen im Wechsel angeordnet sein. Das virtuelle Bild wird dann dem Umgebungsbild dadurch überlagert, dass reflektierte Lichtstrahlen im räumlichen Wechsel mit von dem Brillenglas transmittierten Lichtstrahlen aus der Umgebung in die Pupille eintreffen, so dass in der Pupille eine geometrische Strahlüberlagerung vorliegt. Im Falle teilverspiegelter Streifen können die jeweiligen Streifen unmittelbar benachbart zueinander angeordnet sein. Ein Teil des Umgebungslichtes kann in diesem Fall die teilverspiegelten Streifen in Richtung auf die Austrittspupille passieren. Gleichzeitig werden vom Bildgeber stammende Lichtstrahlen von den teilverspiegelten Streifen in Richtung auf die Austrittspupille reflektiert, so dass eine physikalische Strahlüberlagerung stattfindet.

Alternativ zur Ausbildung der Auskopplungsstruktur als reflektive Streifenstruktur kann die Streifenstruktur auch als refraktive Streifenstruktur ausgebildet sein. Eine derartige Streifenstruktur ist dann an der Innenfläche des Brillenglases angeordnet und bricht vom Bildgeber stammende Strahlen derart, dass sie in die Austrittspupille des Brillenglases abgelenkt werden.

Eine weitere Alternative für die Ausgestaltung der Auskopplungsstruktur besteht darin, die Streifenstruktur als diffraktive Streifenstruktur auszugestalten. In diesem Fall erfolgt die Auskopplung in Richtung auf die Eye Box nicht durch Reflexion oder Refraktion, sondern durch Beugung. Die Teilstrukturen sind dann so ausgerichtet, dass ihre Dispersionsrichtungen einen Winkel von β zueinander aufweisen. Mit einer diffraktiven Streifenstruktur ist in der Regel jedoch eine polychromatische Auskopplung kompliziert, so dass die reflektiven oder refraktiven Streifenstrukturen bevorzugt sind.

Unabhängig von der Ausgestaltung der Streifenstruktur können den jeweiligen Streifenflächen Freiformflächen überlagert sein, wenn die Auskopplungsstruktur ein Teil der Abbildungsoptik sein soll
In der erfindungsgemäßen Abbildungsoptik ist der Winkel β zwischen den beiden Teilstrukturen derart gewählt, dass der Parameter e = (E x a)/d einen Wert von mindestens 0,4, vorzugsweise von mindestens 0,5, annimmt, wobei E den Durchmesser der auf der Eintrittspupille des Auges gelegenen Austrittspupille in mm, α den Sichtfeldwinkel, insbesondere den horizontalen Sichtfeldwinkel, in Radiant und d die Dicke des Brillenglases in mm bezeichnet. Der Parameter e ist ein Maß für den möglichen Lichtdurchsatz durch die Lichtröhre der Abbildungsoptik. Mit Auskopplungsstrukturen nach Stand der Technik ist ein Wert für den Parameter e von maximal etwa 0,25 möglich. Durch die Aufteilung der Auskopplungsstruktur in zwei Teilstrukturen, die unter einem Winkel β zueinander verlaufen, kann der Wert für den Parameter auf wenigstens 0,4, insbesondere auf wenigstens 0,5 erhöht werden. Dies ermöglicht es beispielsweise die Dicke des Brillenglases zu verringern, so dass Abbildungsoptiken mit mindestens einem Sichtfeldwinkel und einer Eye Box, wie sie im Stand der Technik realisiert sind, bei gegenüber dem Stand der Technik verringerter Dicke des Brillenglases realisiert werden können, bspw. mit einem Brillenglas von nicht mehr als 3 mm Dicke und insbesondere von nicht mehr als 2,5 mm Dicke. Typische Glasdicken von Abbildungsoptiken für Datenbrillen nach Stand der Technik liegen dagegen bei 4 mm oder mehr. Andererseits besteht aber auch die Möglichkeit, die Glasdicke des Brillenglases gegenüber dem Stand der Technik unverändert zu lassen und dafür den Sichtfeldwinkel auf wenigstens 12,5°, insbesondere auf wenigstens 15°, weiter insbesondere auf wenigstens 20° zu erhöhen. Im Unterschied dazu beträgt der Sichtfeldwinkel von Abbildungsoptiken für Datenbrillen nach Stand der Technik gegenwärtig ca. 10°. Zudem besteht auch die Möglichkeit, im Vergleich zum Stand der Technik sowohl die Dicke des Brillenglases zu verringern als auch den Sichtfeldwinkel zu vergrößern. So ermöglicht es die Erfindung bspw. bei einer im Vergleich zum Stand der Technik reduzierten Glasdicke von 2,5 mm einen im Vergleich zum Stand der Technik vergrößerten Sichtfeldwinkel von 12,5° bei einem Austrittspupillendurchmesser von 6 mm zu realisieren.

Eine erfindungsgemäße Datenbrille weist eine erfindungsgemäße Abbildungsoptik zum Erzeugen eines virtuellen Bildes auf. Die mit der erfindungsgemäße Datenbrille zu erzielenden Vorteile ergeben sich unmittelbar aus den mit Bezug auf die erfindungsgemäße Abbildungsoptik beschriebenen Vorteilen.

Weitere Merkmale, Eigenschaften und Vorteile der vorliegenden Erfindung, ergeben sich aus der nachfolgenden Beschreibung von Ausführungsbeispielen unter Bezugnahme auf die beiliegenden Figuren.
- Figur 1: zeigt einen Ausschnitt aus dem Abbildungsstrahlengang in einer Datenbrille nach Stand der Technik mit einem kleinen Sichtfeldwinkel.
- Figur 2: zeigt einen Ausschnitt aus dem Abbildungsstrahlengang in einer Datenbrille nach Stand der Technik mit einem großen Sichtfeldwinkel.
- Figur 3: zeigt den grundsätzlichen Aufbau einer Datenbrille mit einer erfindungsgemäßen Abbildungsoptik in einer schematischen Ansicht.
- Figur 4: zeigt den Verlauf von Abbildungsteilstrahlengängen in der Abbildungsoptik aus Figur 3 in einer perspektivischen Darstellung.
- Figur 5: zeigt eine reflektive Auskopplungsstruktur, wie sie in der Abbildungsoptik aus Figur 3 Verwendung finden kann, in einer Schnittansicht.
- Figur 6: zeigt die Auskopplungsstruktur der Abbildungsoptik aus Figur 3 in einer Draufsicht.
- Figur 7: zeigt eine Auskopplungsstruktur nach Stand der Technik in einer Draufsicht.
- Figur 8: zeigt eine alternative reflektive Auskopplungsstruktur, wie sie in der Abbildungsoptik aus Figur 3 Verwendung finden kann, in einer Schnittansicht.
- Figur 9: zeigt eine refraktive Auskopplungsstruktur, wie sie in der Abbildungsoptik aus Figur 3 Verwendung finden kann, in einer Schnittansicht.

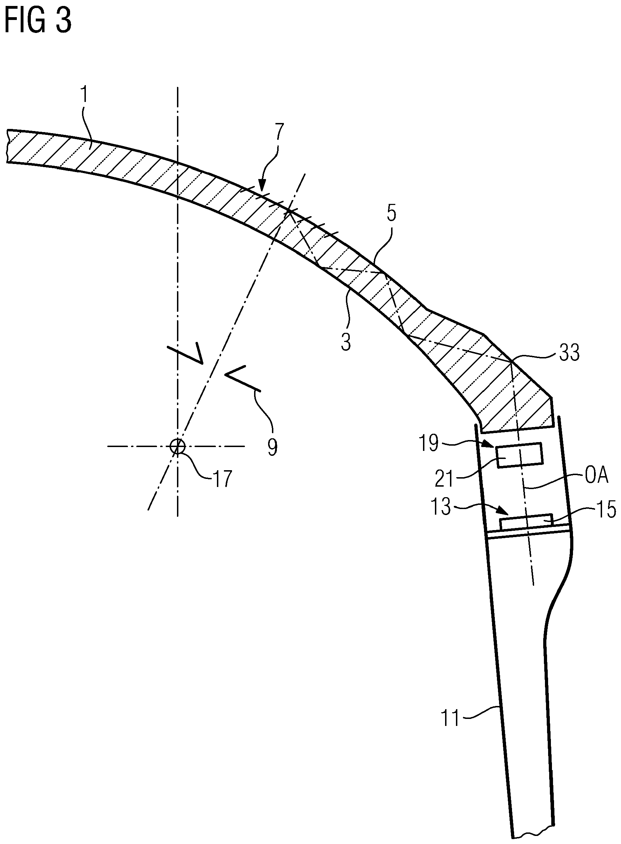

Ein Ausführungsbeispiel für eine Datenbrille mit einer erfindungsgemäßen Abbildungsoptik wird nachfolgend mit Bezug auf die beiliegenden Figuren näher beschrieben. Dabei zeigt Figur 1 eine schematische Darstellung der Datenbrille und Figur 3 den Verlauf von Teilabbildungsstrahlengängen im Brillenglas der Abbildungsoptik.

Die Datenbrille des in Figur 3 gezeigten Ausführungsbeispiels umfasst eine erfindungsgemäße Abbildungsoptik mit wenigstens einem Brillenglas 1, das eine bei aufgesetzter Datenbrille zum Auge des Benutzers hin weisende Innenfläche 3 und eine bei aufgesetzter Datenbrille vom Auge des Benutzers weg weisende Außenfläche 5 besitzt. Weiterhin umfasst die Datenbrille einen Brillenbügel 11, in den im vorliegenden Ausführungsbeispiel eine Anzeigevorrichtung 13 mit einem Bildgeber 15 integriert ist. Die Anzeigevorrichtung 13, die Teil der Abbildungsoptik ist, kann in Abweichung vom gezeigten Ausführungsbeispiel aber auch in ein zwischen dem Bügel 11 und dem Brillenglas 1 angeordnetes Bauelement integriert sein.

Die Abbildungsoptik erzeugt ein virtuelles Bild von einem vom Bildgeber 15 generierten Ausgangsbild. Der entsprechende Abbildungsstrahlengang führt vom Bildgeber 15 in eine Austrittspupille 9 der Abbildungsoptik, die sich bei aufgesetzter Datenbrille am Ort der Pupille des Nutzerauges, von dem in Figur 3 lediglich der Augendrehpunkt 17 dargestellt ist, befindet. Der Abbildungsstrahlengang wird mittels einer Strahlaufteilerstruktur 19 der Abbildungsoptik, die im vorliegenden Ausführungsbeispiel durch einen ersten Spiegel 21 und einen zweiten Spiegel 23 dargestellt ist, in zwei Abbildungsteilstrahlengänge 25, 27 aufgeteilt. Während der erste Spiegel 21 den ersten Abbildungsteilstrahlengang 25 erzeugt und ihn am oberen Ende einer Einkoppelfläche 29 in einen Einkoppelabschnitt 31 des Brillenglases 1 einkoppelt, erzeugt der zweite Spiegel 23 den zweiten Abbildungsteilstrahlengang 27 und koppelt diesen am unteren Ende der Einkoppelfläche 29 in den Einkoppelabschnitt 31 des Brillenglases 1 ein. Von einer an der Außenfläche 5 des Brillenglas 1 im Einkoppelabschnitt 31 gebildeten Reflexionsfläche 33 werden die eingekoppelten Abbildungsteilstrahlengänge 25, 27 derart zwischen die Außenfläche 5 und die Innenfläche 3 des Brillenglases 1 reflektiert, dass sie beim Auftreffen auf die Innenfläche 3 eine Totalreflexion erfahren, durch die sie in einem Winkel auf die Außenfläche 5 auftreffen, der zu einer weiteren Totalreflexion führt. Durch eine Reihe von Totalreflexionen an der Innen- und Außenfläche des Brillenglases 1 werden die Abbildungsteilstrahlengänge 25, 27 zu einer Auskopplungsstruktur 7 der Abbildungsoptik geführt, von wo aus sie in Richtung der Austrittspupille 9 der Abbildungsoptik aus dem Brillenglas 1 ausgekoppelt werden.

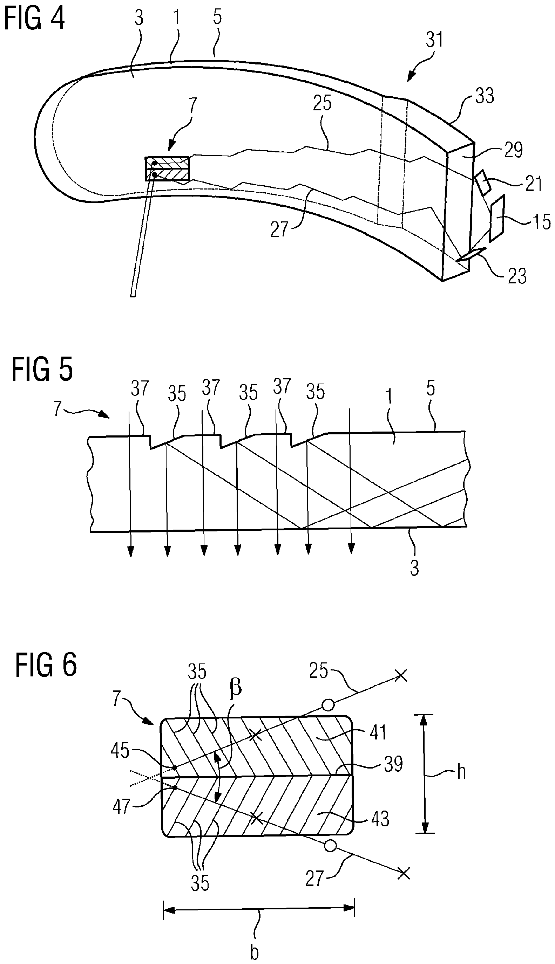

Die Auskopplungsstruktur 7 ist in den Figuren 5 und 6 im Detail dargestellt. Zum Auskoppeln der Abbildungsteilstrahlengänge 25, 27 aus dem Brillenglas 1 weist dieses sich entlang einer linearen Ausdehnungsrichtung erstreckende Facetten 35 auf, die in der Außenfläche 5 des Brillenglases 1 angeordnet sind. Die Fassetten 35 bilden zur Innenseite des Brillenglases 1 hin gewandte voll- oder teilverspiegelte Flächen, die von der Innenfläche 3 des Brillenglases 1 kommende, total reflektierte Strahlenbündel derart ablenken, dass sie aus dem Brillenglas 1 austreten. Die Facetten 35 sind dabei einem derartigen Winkel relativ zur Außenfläche 5 des Brillenglases 1 angeordnet, dass die ausgekoppelten Strahlenbündel durch eine Austrittspupille 9 der Abbildungsoptik verlaufen, die sich bei aufgesetzter Datenbrille am Ort der Pupille des Nutzerauges befindet. Zwischen den einzelnen Facetten 35 befinden sich Zwischenabschnitte 37, deren Flächen der ursprünglichen Außenfläche 5 des Brillenglases 1 entsprechen. Durch die Zwischenabschnitte 37 gelangen Strahlenbündel, die der Umgebung entspringen, durch das Brillenglas 1 in die Austrittspupille 9 der Abbildungsoptik. Auf diese Weise liegt in der Austrittspupille 9 der Abbildungsoptik eine geometrische Überlagerung von Strahlenbündeln aus der Umgebung und von dem Bildgeber 15 ausgehenden Strahlenbündeln vor. Das von der Abbildungsoptik erzeugte virtuelle Bild erscheint daher dem Nutzer so, als würde es in der Umgebung schweben.

Figur 6 zeigt die Auskopplungsstruktur 7 in einer Draufsicht aus Richtung der Austrittspupille 9 der Abbildungsoptik. In Figur 6 ist insbesondere zu erkennen, dass die Auskopplungsstruktur 7 eine Streifenstruktur aufweist, wobei die Streifenstruktur entlang einer Trennlinie 39, die im vorliegenden Ausführungsbeispiel parallel zur Breitenausdehnungsrichtung der Auskopplungsstruktur verläuft, in zwei Teilstrukturen 41, 43 unterteilt ist. Die Teilstrukturen 41, 43 verlaufen unter einem Winkel β zueinander, wobei β den Winkel zwischen zwei senkrecht zur Ausdehnungsrichtung der Facetten 35 verlaufenden Geraden repräsentiert von denen jede einen Winkel β/2 (mit unterschiedlichen Vorzeichen) mit der Trennlinie 39 einschließt. Die Geraden entsprechen im Wesentlichen auch einer Projektion von Strahlen der Abbildungsteilstrahlengänge 25, 27 auf die Teilstrukturen 41, 43 der Auskopplungsstruktur 7. Die Abbildungsteilstrahlengänge sind in Figur 6 durch zwei unter dem Winkel β zueinander verlaufenden Strahlen repräsentiert. Außerdem sind Punkte, bei denen eine Totalreflexion der Strahlen an der Innenfläche 3 des Brillenglases 1 stattfindet, durch Kreuze markiert und Punkte, an denen eine Totalreflexion der Strahlen an der Außenfläche 5 des Brillenglases 1 (in der auch die Auskopplungsstruktur 7 ausgebildet ist) stattfindet, durch Kreise. An den in Figur 6 eingezeichneten Auskopplungspunkten 45, 47 werden die in der Figur dargestellten Strahlen 25, 27 in Richtung auf die Austrittspupille 9 der Abbildungsoptik aus dem Brillenglas 1 ausgekoppelt.

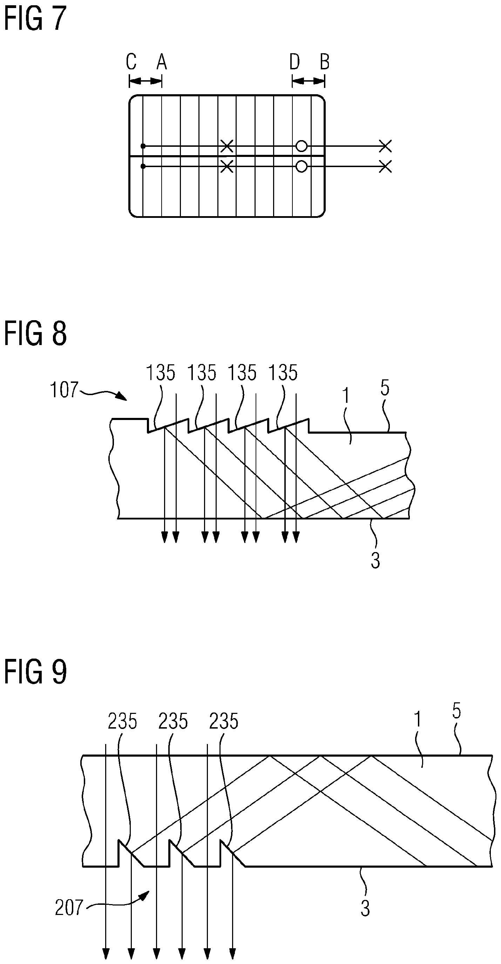

Wie in Figur 6 zu erkennen ist, erfolgt an der Außenfläche 5 des Brillenglases 1 oberhalb und unterhalb der Auskopplungsstruktur 7 eine Totalreflexion der Strahlen 25, 27 in Richtung auf die Innenfläche 3 des Brillenglases 1, von wo aus die Strahlen 25, 27 wiederum mittels einer Totalreflexion zu ihren Auskoppelpunkten 45, 47 reflektiert werden. Diese Auskoppelpunkte 45, 47 liegen am äußersten linken Rand der Auskopplungsstruktur 7. Bei Auskopplungspunkten, die weiter vom linken Rand der Auskopplungsstruktur 7 entfernt sind, d.h. näher am rechten Rand der Auskopplungsstruktur 7 liegen als die in der Figur 6 dargestellten Auskopplungspunkte 45, 47, entfernen sich die durch die Kreise markierten Stellen einer Totalreflexion an der Außenfläche 5 des Brillenglases 1 weiter von der Auskopplungsstruktur 7. Gleiches gilt, wenn die in Figur 6 in großer Nähe zur Trennlinie 39 befindlichen Auskopplungspunkte 45, 47 weiter von der Trennlinie 39 entfernt sind. Auf diese Weise ist es möglich, dass die gesamte Fläche der Auskopplungsstruktur 7 von Strahlen erreicht wird, deren letzte Totalreflexion an der Außenfläche 5 des Brillenglase 1 außerhalb der Auskopplungsstruktur 7 liegt. Zum Vergleich ist in Figur 7 die Situation bei einer Auskopplungsstruktur nach Stand der Technik gezeigt, d.h. bei einer Auskopplungsstruktur, die nicht aus zwei unter einem Winkel zueinander angeordneten Teilstrukturen aufgebaut ist. Wie aus Figur 7 ohne weiteres zu erkennen ist, würde bei einer Auskopplungsstruktur nach Stand der Technik der letzte Punkt, an der eine Totalreflexion an der Außenfläche 5 des Brillenglases 1 stattfinden würde, innerhalb der Auskopplungsstruktur liegen, so dass eine brauchbare Totalreflexion nicht mehr stattfindet. Damit ist eine Situation gegeben, wie sie mit Bezug auf Figur 2 beschrieben worden ist. Durch das Aufteilen der Auskopplungsstruktur in zwei Teilstrukturen und die Anordnung der Teilstrukturen unter einem Winkel β zueinander kann also erreicht werden, dass der letzte Reflexionspunkt für eine Totalreflexion an der Außenfläche 5 des Brillenglases 1 in einen Bereich der Außenfläche 5 verlagert wird, in dem sich die Auskopplungsstruktur 7 nicht befindet. Dadurch kann im Vergleich zum Stand der Technik die nutzbare Fläche der Auskopplungsstruktur vergrößert werden. Während im Stand der Technik nur die Fläche zwischen A und D für eine sinnvolle Auskopplung nutzbar ist, kann bei der erfindungsgemäßen Auskopplungsstruktur die gesamte Fläche für eine sinnvolle Auskopplung genutzt werden.

Die Auskopplungsstruktur 7 liegt relativ nahe an der Austrittspupille 9 der Abbildungsoptik. Da die Austrittspupille 9 in ihrem gesamten Durchmesser von allen abbildenden Strahlenbündeln des Abbildungsstrahlenganges durchlaufen wird, kann durch die pupillennahe Anordnung der Auskopplungsstruktur 7 davon ausgegangen werden, dass die Auskopplungsstruktur 7 die abbildenden Strahlenbündel mit einem Großteil ihrer Fläche in die Austrittspupille 9 reflektiert. Die Strahlaufteilerstruktur 19 ist deshalb so ausgebildet, dass sie von den Urbildpunkten auf den Bildgeber 15 ausgehende Strahlenbündel so aufteilt, dass ein von einem Urbild ausgehendes Strahlenbündel über beide Abbildungsteilstrahlenbündel 25, 27 zur Auskopplungsstruktur 7 geleitet wird. Die hierzu notwendige genaue Anordnung und Ausrichtung der reflektierenden und/oder der brechenden Elemente in der Strahlaufteilerstruktur 19 hängt von den Eigenschaften des Brillenglases 1 und dem Winkel β zwischen den Teilstrukturen 41, 43 der Auskopplungsstruktur 7 ab. Parameter des Brillenglases 1, die in die Anordnung und Ausrichtung der reflektierenden und/oder der brechenden Elemente in der Strahlaufteilerstruktur 19 eingehen, sind insbesondere die Dicke des Brillenglases 1, der Brechungsindex des Materials, aus dem das Brillenglas 1 besteht, die Krümmung der Innenfläche 3 des Brillenglases 1 und die Krümmung der Außenfläche 5 des Brillenglases 1. Darüber hinaus muss sichergestellt sein, dass beide Abbildungsteilstrahlengänge dieselbe Brennweite aufweisen. Dies kann durch eine geeignete Ausgestaltung der an der Bildformung beteiligten Flächen der Abbildungsoptik realisiert werden. Im vorliegenden Ausführungsbeispiel sind die an der Bildformung beteiligten Flächen auf die Auskopplungsstruktur 7 und die Strahlaufteilerstruktur 19 aufgeteilt. Die notwendigen fokussierenden und/oder defokussierenden Eigenschaften der Auskopplungsstruktur 7 und der Strahlaufteilerstruktur 19 werden dadurch erreicht, dass die reflektierenden Flächen der Facetten 35 und die reflektierenden Flächen und/oder die brechenden Flächen der Strahlaufteilerstruktur 19 jeweils Freiformen aufweisen, die zum Herbeiführen der jeweiligen Fokussierung bzw. Defokussierung geeignet ist. Geeignete Flächenformen kann ein Fachmann auf der Basis der Eigenschaften des Brillenglases 1 und der gewünschten Abbildungseigenschaften mit Hilfe einer Optikdesignsoftware ermitteln.

Durch die getrennte Lichtführung der Abbildungsteilstrahlengänge 25, 27 zu den Teilstrukturen 41, 43 der Auskopplungsstruktur 7 kann die Konstante e, die als das Verhältnis des Produktes von Austrittspupillendurchmesser E und Sichtfeldwinkel α zur Glasdicke d gegeben ist, gegenüber dem Stande der Technik mindestens verdoppelt werden. Die Konstante e ist dabei ein Maß für den möglichen Lichtdurchsatz vom Bildgeber in die Austrittspupille der Abbildungsoptik. Der Sichtfeldwinkel α ist dabei der Sichtfeldwinkel in Richtung der Trennlinie 39, die in einer erfindungsgemäßen Abbildungsoptik in der Regel so verläuft, dass sich die Trennlinie 39 bei aufgesetzter Datenbrille im Wesentlichen horizontal erstreckt. Durch das Vergrößern der Konstanten e wird es möglich, beispielsweise den Sichtfeldwinkel von 10°, wie es gegenwärtig im Stand der Technik üblich ist, auf 20° bei einem Durchmesser der Austrittspupille von 6 mm und einer Glasdicke von 4 mm zu vergrößern. Anderseits besteht aber auch die Möglichkeit, den Sichtfeldwinkel α nur auf 12,5° zu vergrößern und die Glasdicke bei einem Austrittspupillenmesser von 6 mm auf 2,5 mm zu reduzieren. In beiden Fällen beträgt die Konstante e ca. 0,52, wohingegen sie im Stand der Technik, in dem der Sichtfeldwinkel typischerweise 10° beträgt, der Austrittspupillenmesser typischerweise 6 mm beträgt und die Glasdicke typischerweise 4 mm beträgt, einen Wert von 0,26 aufweist.

In dem in Bezug auf die Figuren 3 bis 7 beschriebenen Ausführungsbeispiel können die Facetten 35 der Auskopplungsstruktur 7 voll verspiegelt sein, und zwischen den Facetten 35 sind facettenfreie Bereiche 37 vorhanden. Eine alternative Ausgestaltung der Auskopplungsstruktur ist in Figur 8 dargestellt. In dieser Ausgestaltung weist die Auskopplungsstruktur 107 teilverspiegelte Facetten 135 auf. Von der Innenseite 3 des Brillenglases 1 in Richtung auf die Facetten 135 totalreflektierte Strahlenbündel werden von den Facetten 135 in die Austrittspupille 9 reflektiert. Aus der Umgebung stammende Strahlenbündel können die teilverspielten Facetten in Richtung auf die Austrittspupille passieren, so dass im Bereich er Austrittspupille 9 eine physikalische Überlagerung der Strahlenbündel des Abbildungsstrahlengangs mit Strahlenbündeln aus der Umgebung stattfindet, so dass bei einem Nutzer einer mit der Abbildungsoptik versehenen Datenbrille der Eindruck entsteht, das virtuelle Bild schwebe in der Umgebung. Die im Ausführungsbeispiel mit Bezug auf die Figuren 3 bis 7 beschriebene Auskopplungsstruktur 7 kann ohne weiteres durch die mit Bezug auf Figur 8 beschriebene Auskopplungsstruktur 107 ersetzt werden.

Eine weitere alternative Ausgestaltung der Auskopplungsstruktur ist in Figur 9 dargestellt. Die in Figur 9 gezeigte Auskopplungsstruktur 207 basiert nicht auf einer Reflexion der auszukoppelnden Strahlenbündel in Richtung auf die Austrittspupille 9, sondern auf einer Brechung der auszukoppelnden Strahlenbündel in Richtung auf die Austrittspupille 9. Hierzu sind in der in Figur 9 dargestellten Auskopplungsstruktur 7 Facetten an der Innenfläche 3 des Brillenglases 1 angeordnet, auf die von der Außenfläche 5 des Brillenglases 1 letztmalig total reflektierte Strahlenbündel der Abbildungsteilstrahlengänge auftreffen. Beim Übertritt in das optisch dünnere Medium Luft (oder ein anderes optisch dünneres Medium) werden sie dann von der Flächennormalen der Facetten 235 weg in Richtung auf die Austrittspupille 9 gebrochen. Wenn in dem mit Bezug auf die Figuren 3 bis 7 beschriebenen Ausführungsbeispiel eine Auskopplungsstruktur 207, wie sie in Figur 9 gezeigt ist, Verwendung finden soll, muss die Auskopplungsstruktur von der Außenfläche 5 des Brillenglases 1 an die Innenfläche 3 des Brillenglases verlagert werden. Außerdem muss der Abbildungsstrahlengang so modifiziert werden, dass die letztmalige Totalreflexion vor der Auskopplung der Abbildungsteilstrahlengänge nicht an der Innenfläche 3 des Brillenglases 1, sondern an seiner Außenfläche 5 erfolgt.

Wie bei der in Figur 5 dargestellten Auskopplungsstruktur 7 können auch bei den in den Figuren 8 und 9 dargestellten Auskopplungsstrukturen 107, 207 den reflektierenden bzw. brechenden Flächen der Facetten Freiformflächen überlagert sein, so dass sie als Teil der Abbildungsoptik dienen können.

Die vorliegende Erfindung eignet sich insbesondere für virtuelle Bilder im Querformat und erfordert umso kleinere Winkel zwischen den Teilstrukturen der Auskopplungsstruktur, je größer das Verhältnis von Breite zu Höhe im Bildformat ist. Die Erfindung eignet sich daher besonders für Bilder im Querformat, insbesondere für Bilder im Querformat mit einem Seitenverhältnis von 16:9. Im Falle eines Hochformats können die Abbildungsteilstrahlengänge bspw. an der Oberseite oder der Unterseite des Brillenglases zwischen die Innenfläche und die Außenfläche eingekoppelt werden, wobei die Trennlinie zwischen den Teilstrukturen der Auskopplungsstruktur dann parallel zur Höhenausdehnungsrichtung verläuft. Die Einkopplung der Abbildungsteilstrahlengänge zwischen die Innenfläche und die Außenfläche des Brillenglases von der Seite und der Verlauf der Trennlinie parallel zur Breitenausdehnung der Auskopplungsstruktur können jedoch auch bei einem Hochformat bestehen bleiben, wenn der benötigte Winkel β zwischen den Teilstrukturen der Auskopplungsstruktur nicht so groß wird, dass einer der Abbildungsteilstrahlengänge die Oberseite oder die Unterseite des Brillenglases passiert.

Im vorliegenden Ausführungsbeispiel sind die Reflexionen zwischen der Innenfläche und der Außenfläche des Brillenglases, mit denen der Abbildungsstrahlengang zur Auskopplungsstruktur geleitet wird, durch Totalreflexionen an den Grenzflächen zwischen dem Medium des Brillenglases und der umgebenden Luft realisiert. Alternativ können alle oder einige der Reflexionen aber auch mit Hilfe von auf das Brillenglas aufgebrachten oder in das Brillenglas eingebrachten reflektiven oder teilreflektiven Beschichtungen realisiert sein.

Die vorliegende Erfindung wurde zu Erläuterungszwecken anhand eines Ausführungsbeispiels und seinen Abwandlungen ausführlich beschrieben. Ein Fachmann versteht jedoch, dass weitere Abwandlungen, die in den Ausführungsbeispielen nicht explizit beschrieben sind, erfolgen können. Beispielsweise kann die Reflexionsfläche 33 statt in einem Teil des Brillenglases in einem separaten Prisma angeordnet sein, welches zwischen dem Brillenglas und dem Bildgeber angeordnet ist. Die Strahlaufteilerstruktur kann dann entweder zwischen dem Bildgeber und dem Prisma oder zwischen dem Prisma und dem Brillenglas angeordnet sein. Außerdem braucht die Auskopplungsstruktur nicht notwendigerweise in zwei gleich große Teilstrukturen aufgeteilt zu werden, und die Abbildungsteilstrahlengänge brauchen nicht im gleichen Winkel (mit unterschiedlichen Vorzeichen) zur Trennlinie zu verlaufen. Insbesondere kann es die Anordnung der Auskopplungsstruktur im Brillenglas notwendig machen, dass die Abbildungsteilstrahlengänge unterschiedliche Winkel zur Trennlinie aufweisen, damit sie nicht den oberen oder unteren Rand des Brillenglases passieren, was wiederum zu der Notwendigkeit führen kann, dass die Teilstrukturen der Auskopplungsstruktur in einer Richtung senkrecht zur Trennlinie unterschiedliche Abmessungen aufweisen. Die vorliegende Erfindung soll daher nicht durch Merkmalskombinationen des beschriebenen Ausführungsbeispiels und seiner Variationen beschränkt sein, sondern lediglich durch die beigefügten Ansprüche.

## Patentansprüche

1. Abbildungsoptik zum Erzeugen eines virtuellen Bildes, umfassend:
- wenigstens ein vor dem Auge zu tragendes Brillenglas (1), welches eine dem Auge zuzuwendende Innenfläche (3) und eine vom Auge abzuwendende Außenfläche (5) aufweist,
- eine Anzeigevorrichtung (13), welche einen Bildgeber (15) zum Anzeigen eines Ausgangsbildes umfasst, wobei der Bildgeber (15) Ausgangspunkt eines das virtuelle Bild aus dem Ausgangsbild erzeugenden Abbildungsstrahlengangs ist,
- eine Einkopplungseinrichtung (29, 31, 33) zum Einkoppeln des Abbildungsstrahlengangs zwischen die Innenfläche (3) und die Außenfläche (5) des Brillenglases (1),
- eine in dem Brillenglas (1) vorhandene Auskopplungsstruktur (7, 107, 207) zum Auskoppeln des Abbildungsstrahlengangs aus dem Brillenglas (1) in Richtung auf das Auge,
- wobei die Einkopplungseinrichtung (29, 31, 33) den Abbildungsstrahlengang derart zwischen die Innenfläche (3) und die Außenfläche (5) des Brillenglases (1) einkoppelt, dass er durch Reflexionen zwischen der Innenfläche (3) und der Außenfläche (5) zur Auskopplungsstruktur (7, 107, 207) geleitet wird,
wobei
- die Auskopplungsstruktur (7, 107, 207) eine Streifenstruktur mit Facetten (35, 135, 235) aufweist, wobei die Streifenstruktur entlang einer Trennlinie (39) aus zwei in einem Winkel β zueinander verlaufenden Teilstrukturen (41, 43) zusammengesetzt ist, die aus unterschiedlichen Richtungen eintreffende Strahlengänge (25, 27) in Richtung auf das Auge auskoppeln, wobei die unterschiedlichen Richtungen der eintreffenden Strahlengänge (25, 27) durch den Winkel β zwischen den Teilstrukturen (41, 43) bestimmt sind und wobei die Streifenstruktur entlang der Trennlinie (39) in die zwei Teilstrukturen (41, 43) unterteilt ist, wobei β den Winkel zwischen zwei senkrecht zur Ausdehnungsrichtung der Facetten (35, 135, 235) verlaufenden Geraden repräsentiert, und
- zwischen der Anzeigevorrichtung (13) und demjenigen Bereich des Brillenglases (1), in dem die erste Reflexion stattfindet, eine Strahlaufteilerstruktur (21, 23) vorhanden ist, die den vom Bildgeber (15) ausgehenden Abbildungsstrahlengang in zwei Abbildungsteilstrahlengänge aufteilt, welche die aus unterschiedlichen Richtungen an den Teilstrukturen (41, 43) der Auskopplungsstruktur eintreffenden Strahlengänge (25, 27) bilden,
**dadurch gekennzeichnet, dass**
- die Auskopplungsstruktur (7, 107, 207) an der Außenfläche (5) oder der Innenfläche (3) des Brillenglases (1) angeordnet ist und der Winkel β derart gewählt ist, dass im Falle einer an der Außenfläche (5) des Brillenglases (1) angeordneten Auskopplungsstruktur (7, 107) der letzte Reflexionspunkt für eine Reflexion an der Außenfläche (5) im Vergleich zu einer nicht aus zwei unter einem Winkel β zueinander angeordneten Teilstrukturen (41, 43) aufgebauten Auskoppelstruktur in einen Bereich der Außenfläche (5) verlagert wird, in dem sich die Auskopplungsstruktur (7, 107) nicht befindet, so dass die gesamte Fläche der Auskopplungsstruktur (7) von Strahlen der eintreffenden Strahlengänge erreichbar ist, deren letzte Reflexion an der Außenfläche (5) des Brillenglases (1) außerhalb der Auskopplungsstruktur (7) liegt, bzw. dass im Falle einer an der Innenfläche (3) des Brillenglases (1) angeordneten Auskopplungsstruktur (207) der letzte Reflexionspunkt für eine Reflexion an der Innenfläche (3) im Vergleich zu einer nicht aus zwei unter einem Winkel β zueinander angeordneten Teilstrukturen (41, 43) aufgebauten Auskoppelstruktur in einen Bereich der Innenfläche (3) verlagert wird, in dem sich die Auskopplungsstruktur (207) nicht befindet, so dass die gesamte Fläche der Auskopplungsstruktur (7) von Strahlen der eintreffenden Strahlengänge erreichbar ist, deren letzte Reflexion an der Innenfläche (3) des Brillenglases (1) außerhalb der Auskopplungsstruktur (7) liegt.

2. Abbildungsoptik nach Anspruch 1, **dadurch gekennzeichnet, dass** der eine der aus unterschiedlichen Richtungen kommenden Strahlengänge (25) einen Winkel β/2 mit der Trennlinie (39) einschließt, wohingegen der andere der aus unterschiedlichen Richtungen kommenden Strahlengänge (27) einen Winkel - β/2 mit der Trennlinie (39) einschließt.

3. Abbildungsoptik nach Anspruch 1 oder Anspruch 2, **dadurch gekennzeichnet, dass** die Einkopplungseinrichtung (29, 31, 33) an einer Seitenkante des Brillenglases (1) angeordnet ist, die Auskopplungsstruktur (7, 107, 207) eine sich entlang einer Breitenausdehnungsrichtung erstreckende Breite (b) und eine sich entlang einer zur Breitenausdehnungsrichtung senkrechten Höhenausdehnungsrichtung erstreckende Höhe (h) aufweist, wobei die Breitenausdehnungsrichtung im Wesentlichen in Querrichtung des Brillenglases (1) verläuft, und die Trennlinie (39) zwischen den Teilstrukturen parallel zur Breitenausdehnungsrichtung verläuft.

4. Abbildungsoptik nach einem der Ansprüche 1 bis 3, **dadurch gekennzeichnet, dass** die Trennlinie (39) die Auskopplungsstruktur (7, 107, 207) in zwei gleich große Teilstrukturen (41, 43) aufteilt.

5. Abbildungsoptik nach einem der Ansprüche 1 bis 4, **dadurch gekennzeichnet, dass** die Strahlaufteilerstruktur für jeden Abbildungsteilstrahlengang wenigstens ein Ablenkelement (21, 23) umfasst, das den jeweiligen Abbildungsteilstrahlengang in Richtung auf die entsprechende Teilstruktur (41, 43) der Auskopplungsstruktur (7, 107, 207) in das Brillenglas (1) ablenkt, die Ablenkelemente (21, 23) für die beiden Abbildungsteilstrahlengänge so ausgerichtet sind, dass von demselben Urbildpunkt des Bildgebers (15) ausgehende Strahlenbündel (25, 27) der Abbildungsteilstrahlengänge auf demselben Bildpunkt im virtuellen Bild wieder zusammengeführt werden, und die Abbildungsoptik für beide Abbildungsteilstrahlengänge dieselbe Brennweite aufweist.

6. Abbildungsoptik nach Anspruch 5, **dadurch gekennzeichnet, dass** die Strahlaufteilerstruktur (21, 23) wenigstens ein reflektives Ablenkelement und/oder wenigstens ein refraktives Ablenkelement umfasst.

7. Abbildungsoptik nach einem der Ansprüche 1 bis 6, **dadurch gekennzeichnet, dass** die Einkopplungseinrichtung (29, 31, 33) und/oder die Auskopplungsstruktur (7, 107, 207) und/oder die Strahlaufteilerstruktur (21, 23) so geformt sind, dass sie zusätzlich zu ihren primären Funktionen auch dazu eingerichtet sind an der Bilderzeugung teilzunehmen.

8. Abbildungsoptik nach einem der Ansprüche 1 bis 7, **dadurch gekennzeichnet, dass** im Falle einer an der Außenfläche (5) des Brillenglases (1) angeordneten Auskopplungsstruktur (7, 107) die Auskopplungsstruktur (7, 107) eine reflektive Streifenstruktur mit reflektiven Streifen ist.

9. Abbildungsoptik nach einem der Ansprüche 1 bis 7, **dadurch gekennzeichnet, dass** im Falle einer an der Innenfläche (3) des Brillenglases (1) angeordneten Auskopplungsstruktur (7, 107) die Auskopplungsstruktur (207) eine refraktive Streifenstruktur mit refraktiven Streifen ist.

10. Abbildungsoptik nach einem der Ansprüche 1 bis 7, **dadurch gekennzeichnet, dass** die Auskopplungsstruktur eine diffraktive Streifenstruktur mit diffraktiven Streifen ist.

11. Abbildungsoptik nach einem der Ansprüche 1 bis 10, **dadurch gekennzeichnet, dass** der Winkel β zwischen den beiden Teilstrukturen (41, 43) derart gewählt ist, dass der Parameter e = (E x a)/d eine Wert von mindestens 0,4 annimmt, wobei E den Durchmesser der auf der Eintrittspupille (9) des Auges gelegenen Austrittspupille in mm, α den Sichtfeldwinkel in Radiant und d die Dicke des Brillenglases (1) in mm angibt.

12. Abbildungsoptik nach Anspruch 11, **dadurch gekennzeichnet, dass** das Brillenglas (1) eine Dicke von d von nicht mehr als 3 mm aufweist.

13. Abbildungsoptik nach Anspruch 11 oder Anspruch 12, **dadurch gekennzeichnet, dass** der horizontale Sichtfeldwinkel α wenigstens 12,5 Grad beträgt.

14. Datenbrille mit einer Abbildungsoptik zum Erzeugen eines virtuellen Bildes nach einem der Ansprüche 1 bis 13.

## Claims

1. Imaging optical unit for generating a virtual image, comprising:
- at least one spectacle lens (1) which is to be worn in front of the eye and has an inner surface (3) which is to face the eye and an outer surface (5) which is to face away from the eye,
- a display apparatus (13) which comprises an image generator (15) for displaying an initial image, wherein the image generator (15) is the starting point of an imaging beam path which generates the virtual image from the initial image,
- an input coupling device (29, 31, 33) for coupling in the imaging beam path between the inner surface (3) and the outer surface (5) of the spectacle lens (1),
- an output coupling structure (7, 107, 207) which is present in the spectacle lens (1) and is intended to couple the imaging beam path out of the spectacle lens (1) in the direction of the eye,
- wherein the input coupling device (29, 31, 33) couples in the imaging beam path between the inner surface (3) and the outer surface (5) of the spectacle lens (1) in such a manner that it is guided to the output coupling structure (7, 107, 207) by reflections between the inner surface (3) and the outer surface (5),
wherein
- the output coupling structure (7, 107, 207) has a strip structure with facets (35, 135, 235), wherein, along a separating line (39), the strip structure is composed of two partial structures (41, 43) which run at an angle β with respect to one another and couple out beam paths (25, 27) arriving from different directions in the direction of the eye, wherein the different directions of the arriving beam paths (25, 27) are determined by the angle β between the partial structures (41, 43), and wherein the strip structure is subdivided into the two partial structures (41, 43) along the separating line (39), wherein β represents the angle between two straight lines running perpendicular to the direction of extent of the facets (35, 135, 235), and
- there is a beam splitter structure (21, 23) between the display apparatus (13) and that region of the spectacle lens (1) in which the first reflection takes place, which beam splitter structure splits the imaging beam path coming from the image generator (15) into two imaging partial beam paths which form the beam paths (25, 27) arriving at the partial structures (41, 43) of the output coupling structure from different directions,
**characterized in that**
- the output coupling structure (7, 107, 207) is arranged on the outer surface (5) or the inner surface (3) of the spectacle lens (1), and the angle β is selected in such a manner that, in the case of an output coupling structure (7, 107) arranged on the outer surface (5) of the spectacle lens (1), the last reflection point for a reflection at the outer surface (5), in comparison with an output coupling structure which is not constructed from two partial structures (41, 43) arranged at an angle β with respect to one another, is moved to a region of the outer surface (5) in which the output coupling structure (7, 107) is not situated, with the result that the entire area of the output coupling structure (7) can be reached by beams of the arriving beam paths, the last reflection of which is at the outer surface (5) of the spectacle lens (1) outside the output coupling structure (7), or, in the case of an output coupling structure (207) arranged on the inner surface (3) of the spectacle lens (1), the last reflection point for a reflection at the inner surface (3), in comparison with an output coupling structure which is not constructed from two partial structures (41, 43) arranged at an angle β with respect to one another, is moved to a region of the inner surface (3) in which the output coupling structure (207) is not situated, with the result that the entire area of the output coupling structure (7) can be reached by beams of the arriving beam paths, the last reflection of which is at the inner surface (3) of the spectacle lens (1) outside the output coupling structure (7).

2. Imaging optical unit according to Claim 1, **characterized in that** one of the beam paths (25) coming from different directions encloses an angle β/2 with the separating line (39), wherein the other of the beam paths (27) coming from different directions encloses an angle - β/2 with the separating line (39).

3. Imaging optical unit according to Claim 1 or Claim 2, **characterized in that** the input coupling device (29, 31, 33) is arranged on a side edge of the spectacle lens (1), the output coupling structure (7, 107, 207) has a width (b) extending along a width direction of extent and a height (h) extending along a height direction of extent perpendicular to the width direction of extent, wherein the width direction of extent runs substantially in the transverse direction of the spectacle lens (1), and the separating line (39) runs between the partial structures parallel to the width direction of extent.

4. Imaging optical unit according to one of Claims 1 to 3, **characterized in that** the separating line (39) divides the output coupling structure (7, 107, 207) into two partial structures (41, 43) of the same size.

5. Imaging optical unit according to one of Claims 1 to 4, **characterized in that** the beam splitter structure comprises, for each imaging partial beam path, at least one deflection element (21, 23) which deflects the respective imaging partial beam path into the spectacle lens (1) in the direction of the corresponding partial structure (41, 43) of the output coupling structure (7, 107, 207), the deflection elements (21, 23) for the two imaging partial beam paths are oriented in such a manner that beams (25, 27) of the imaging partial beam paths which come from the same original pixel of the image generator (15) are combined again at the same pixel in the virtual image, and the imaging optical unit has the same focal length for both imaging partial beam paths.

6. Imaging optical unit according to Claim 5, **characterized in that** the beam splitter structure (21, 23) comprises at least one reflective deflection element and/or at least one refractive deflection element.

7. Imaging optical unit according to one of Claims 1 to 6, **characterized in that** the input coupling device (29, 31, 33) and/or the output coupling structure (7, 107, 207) and/or the beam splitter structure (21, 23) is/are formed in such a manner that, in addition to their primary functions, they are also configured to participate in generating the images.

8. Imaging optical unit according to one of Claims 1 to 7, **characterized in that**, in the case of an output coupling structure (7, 107) arranged on the outer surface (5) of the spectacle lens (1), the output coupling structure (7, 107) is a reflective strip structure having reflective strips.

9. Imaging optical unit according to one of Claims 1 to 7, **characterized in that**, in the case of an output coupling structure (7, 107) arranged on the inner surface (3) of the spectacle lens (1), the output coupling structure (207) is a refractive strip structure having refractive strips.

10. Imaging optical unit according to one of Claims 1 to 7, **characterized in that** the output coupling structure is a diffractive strip structure having diffractive strips.

11. Imaging optical unit according to one of Claims 1 to 10, **characterized in that** the angle β between the two partial structures (41, 43) is selected in such a manner that the parameter e = (E x α)/d assumes a value of at least 0.4, where E indicates the diameter of the exit pupil placed on the entrance pupil (9) of the eye in mm, α indicates the field of view angle in radians and d indicates the thickness of the spectacle lens (1) in mm.

12. Imaging optical unit according to Claim 11, **characterized in that** the spectacle lens (1) has a thickness d of no more than 3 mm.

13. Imaging optical unit according to Claim 11 or Claim 12, **characterized in that** the horizontal field of view angle α is at least 12.5°.

14. Smartglasses having an imaging optical unit for generating a virtual image according to one of Claims 1 to 13.

## Revendications

1. Optique de représentation destinée à générer une image virtuelle, comprenant :
- au moins un verre de lunette (1) à porter devant l'œil, lequel possède une surface intérieure (3) à tourner vers l'œil et une surface extérieure (5) à tourner à l'opposé de l'œil,
- un arrangement d'affichage (13), lequel comporte un transmetteur d'image (15) destiné à afficher une image initiale, le transmetteur d'image (15) étant le point de départ d'un trajet de rayon de représentation qui génère l'image virtuelle à partir de l'image initiale,
- un dispositif d'injection (29, 31, 33) destiné à injecter le trajet de rayon de représentation entre la surface intérieure (3) et la surface extérieure (5) du verre de lunette (1),
- une structure de découplage (7, 107, 207) présente dans le verre de lunette (1), destinée à découpler le trajet de rayon de représentation hors du verre de lunette (1) en direction de l'œil,
- le dispositif d'injection (29, 31, 33) injectant le trajet de rayon de représentation entre la surface intérieure (3) et la surface extérieure (5) du verre de lunette (1) de telle sorte qu'il est guidé vers la structure de découplage (7, 107, 207) par des réflexions entre la surface intérieure (3) et la surface extérieure (5) ,
- la structure de découplage (7, 107, 207) possédant une structure à bandes avec des facettes (35, 135, 235), la structure à bandes, le long d'une ligne de séparation (39), étant constituée de deux structures partielles (41, 43) qui suivent un tracé selon un angle β l'une par rapport à l'autre, lesquelles découplent en direction de l'œil les trajets de rayon (25, 27) incidents depuis différentes directions, les différentes directions des trajets de rayon (25, 27) incidents étant déterminées par l'angle β entre les structures partielles (41, 43) et la structure à bandes étant divisée le long de la ligne de séparation (39) en les deux structures partielles (41, 43), β représentant l'angle entre deux droites qui suivent un tracé perpendiculaire à la direction d'extension des facettes (35, 135, 235), et
- entre l'arrangement d'affichage (13) et la zone du verre de lunette (1) dans lequel se produit la première réflexion se trouvant une structure de partage de rayons (21, 23), laquelle partage le trajet de rayon de représentation émanant du transmetteur d'image (15) en deux trajets de rayon partiels de représentation, lesquels forment les trajets de rayon (25, 27) incidents sur les structures partielles (41, 43) depuis différentes directions,
**caractérisée en ce que**
- la structure de découplage (7, 107, 207) est disposée au niveau de la surface extérieure (5) ou de la surface intérieure (3) du verre de lunette (1) et l'angle β est choisi de telle sorte que dans le cas d'une structure de découplage (7, 107) disposée au niveau de la surface extérieure (5) du verre de lunette (1), le dernier point de réflexion pour une réflexion sur la surface extérieure (5), par rapport à une structure de découplage qui n'est pas constituée de deux structures partielles (41, 43) disposées selon un angle β l'une par rapport à l'autre, est décalé dans une zone de la surface extérieure (5) dans laquelle ne se trouve pas la structure de découplage (7, 107), de sorte que la totalité de la surface de la structure de découplage (7) peut être atteinte par des rayons des trajets de rayon incidents dont la dernière réflexion sur la surface extérieure (5) du verre de lunette (1) se trouve à l'extérieur de la structure de découplage (7), ou **en ce que** dans le cas d'une structure de découplage (207) disposée au niveau de la surface intérieure (3) du verre de lunette (1), le dernier point de réflexion pour une réflexion sur la surface intérieure (3), par rapport à une structure de découplage qui n'est pas constituée de deux structures partielles (41, 43) disposées selon un angle β l'une par rapport à l'autre, est décalé dans une zone de la surface intérieure (3) dans laquelle ne se trouve pas la structure de découplage (207), de sorte que la totalité de la surface de la structure de découplage (7) peut être atteinte par des rayons des trajets de rayon incidents dont la dernière réflexion sur la surface intérieure (3) du verre de lunette (1) se trouve à l'extérieur de la structure de découplage (7).

2. Optique de représentation selon la revendication 1, **caractérisée en ce que** l'un des trajets de rayon (25) provenant de différentes directions forme un angle β/2 avec la ligne de séparation (39), tandis que l'autre des trajets de rayon (27) provenant de différentes directions forme un angle -β/2 avec la ligne de séparation (39).

3. Optique de représentation selon la revendication 1 ou la revendication 2, **caractérisée en ce que** le dispositif d'injection (29, 31, 33) est disposé au niveau d'un bord latéral du verre de lunette (1), la structure de découplage (7, 107, 207) présente une largeur (b) qui s'étend le long d'une direction d'extension en largeur et une hauteur (h) qui s'étend le long d'une direction d'extension en hauteur perpendiculaire à la direction d'extension en largeur, la direction d'extension en largeur suivant un tracé sensiblement dans la direction transversale du verre de lunette (1) et la ligne de séparation (39) entre les structures partielles suivant un tracé parallèle à la direction d'extension en largeur.

4. Optique de représentation selon l'une des revendications 1 à 3, **caractérisée en ce que** la ligne de séparation (39) partage la structure de découplage (7, 107, 207) en deux structures partielles (41, 43) de même taille.

5. Optique de représentation selon l'une des revendications 1 à 4, **caractérisée en ce que** pour chaque trajet de rayon partiel de représentation, la structure de partage de rayon comporte au moins un élément de déviation (21, 23) qui dévie le trajet de rayon partiel de représentation respectif en direction de la structure partielle (41, 43) correspondante de la structure de découplage (7, 107, 207) dans le verre de lunette (1), les éléments de déviation (21, 23) pour les deux trajets de rayon partiels de représentation étant orientés de telle sorte que les faisceaux de rayons (25, 27) des trajets de rayon partiels de représentation qui émanent du même pixel original du transmetteur d'image (15) sont de nouveau réunis sur le même pixel dans l'image virtuelle, et l'optique de représentation présente la même distance focale pour les deux trajets de rayon partiels de représentation.

6. Optique de représentation selon la revendication 5, **caractérisée en ce que** la structure de partage de rayons (21, 23) comporte au moins un élément de déviation réfléchissant et/ou au moins un élément de déviation réfractif.

7. Optique de représentation selon l'une des revendications 1 à 6, **caractérisée en ce que** le dispositif d'injection (29, 31, 33) et/ou la structure de découplage (7, 107, 207) et/ou la structure de partage de rayons (21, 23) sont façonnés de telle sorte qu'en plus de leurs fonctions primaires, ils sont également conçus pour participer à la génération d'image.

8. Optique de représentation selon l'une des revendications 1 à 7, **caractérisée en ce que** dans le cas d'une structure de découplage (7, 107) disposée au niveau de la surface extérieure (5) du verre de lunette (1), la structure de découplage (7, 107) est une structure à bandes réfléchissante comprenant des bandes réfléchissantes.

9. Optique de représentation selon l'une des revendications 1 à 7, **caractérisée en ce que** dans le cas d'une structure de découplage (7, 107) disposée au niveau de la surface intérieure (3) du verre de lunette (1), la structure de découplage (207) est une structure à bandes réfractive comprenant des bandes réfractives.

10. Optique de représentation selon l'une des revendications 1 à 7, **caractérisée en ce que** la structure de découplage est une structure à bandes diffractive comprenant des bandes diffractives.

11. Optique de représentation selon l'une des revendications 1 à 10, **caractérisée en ce que** l'angle β entre les deux structures partielles (41, 43) est choisi de telle sorte que le paramètre e = (E x α)/d prend une valeur minimale de 0,4, E désignant le diamètre en mm de la pupille de sortie posée sur la pupille d'entrée (9) de l'œil, α l'angle du champ de vision en radiants et d l'épaisseur du verre de lunette (1) en mm.

12. Optique de représentation selon la revendication 11, **caractérisée en ce que** le verre de lunette (1) présente une épaisseur d n'excédant pas 3 mm.

13. Optique de représentation selon la revendication 11 ou la revendication 12, **caractérisée en ce que** l'angle du champ de vision α horizontal est d'au moins 12,5 degrés.

14. Lunettes connectées comprenant une optique de représentation destinée à générer une image virtuelle selon l'une des revendications 1 à 13.
